(19) Europäisches Patentamt
European Patent Office
Office européen des brevets

(11) Publication number: **0 189 591**
**A1**


(12) **EUROPEAN PATENT APPLICATION**


(21) Application number: 85116548.0

(51) Int. Cl.⁴: **G01P 3/36**

(22) Date of filing: 24.12.85

(30) Priority: 25.12.84 JP 277229/84
25.12.84 JP 277230/84

(43) Date of publication of application:
06.08.86 Bulletin 86/32

(84) Designated Contracting States:
AT BE CH DE FR GB IT LI LU NL SE



(71) Applicant: **OMRON TATEISI ELECTRONICS CO.**
**10, Tsuchido-cho Hanazono Ukyo-ku**
**Kyoto 616(JP)**

(72) Inventor: **Morishita, Koji OMRON TATEISI ELECTRONICS CO.**
**Patent Center 20, Igadera Shimo-Kaiinji**
**Nagaokakyo-shi Kyoto(JP)**
Inventor: **Kitajima, Hiroshi OMRON TATEISI ELECTRONICS CO.**
**Patent Center 20, Igadera Shimo-Kaiinji**
**Nagaokakyo-shi Kyoto(JP)**
Inventor: **Yoshida, Tomio OMRON TATEISI ELECTRONICS CO.**
**Patent Center 20, Igadera Shimo-Kaiinji**
**Nagaokakyo-shi Kyoto(JP)**
Inventor: **Nakatsuka, Nobuo OMRON TATEISI ELECTRONICS CO.**
**Patent Center 20, Igadera Shimo-Kaiinji**
**Nagaokakyo-shi Kyoto(JP)**

(74) Representative: **WILHELMS, KILIAN & PARTNER**
**Patentanwälte**
**Eduard-Schmid-Strasse 2**
**D-8000 München 90(DE)**


(54) **Method of and system for measuring velocity of moving object.**


(57) There are a method of and a system for measuring the velocity of a moving object by illuminating a laser beam onto the moving object, detecting the speckle pattern by a photoelectric detector, and processing the detection signal. This system comprises: a light source (1) to emit a coherent laser beam; and optical system (2) to focus the laser beam emitted, this laser beam being converted to a waist beam having a waist region due to the focusing, and a convergent region and a divergent region being respectively formed in front of and behind the waist region of the waist beam; a photoelectric detector (4) as a photoelectric converting device, arranged in the divergent region of the laser beam, for detecting the speckle pattern produced due to the transmitting light or reflected light of the moving object (10) which passes through the waist region of the laser beam; and a signal processor (5) to process the detection signal of the photoelectric detector (4) by a predetermined method and to calculate the velocity of the moving object (10) in accordance with a predetermined operating expression. With this system, relatively high accurate measurement values can be derived.

SIGNAL PROCESSING
LASER
Fig.I



EP 0 189 591 A1

# METHOD OF AND SYSTEM FOR MEASURING VELOCITY OF MOVING OBJECT

## BACKGROUND OF THE INVENTION

### Field of the Invention

The present invention relates to a method of and a system for measuring the velocity of a moving object by illuminating the moving object with a coherent light beam such as a laser beam or the like and detecting the movement of the irregular bright and dark pattern (speckle pattern) which is produced since the light transmitting through the object or the light reflected therefrom is scattered by the object.

### Description of the Prior Art

The theoretical analysis of the dynamic laser speckles phenomena and their application to the measurement of the kinetic velocity of the diffuse object are described in T. Asakura and N. Takai, "Dynamic Laser Speckles and Their Application to Velocity Measurements of the Diffuse Object", Applied Physics 25, pages 179 - 194, 1984. Substantially the same content as the above reference is described in N. Takai and T. Asakura, "Characteristics of Dynamic Laser Speckles and Their Application to Velocity Measurements (I), (II)", Laser Kenkyu, Vol. 8, No. 2, pages 37 - 45 and Vol. 8, No. 2, pages 3 - 10.

These references describe that two different fundamental motions of speckles occur in dependence on the position of the object illuminated with the laser beam and on the observational position of the speckle pattern. One type of the speckle motion is called a "translation" of speckles. According to this type, as the diffuse object moves, the speckles move as a whole and its shape remains unchanged for a considerable displacement. The other type of the speckle motion is called a "boiling" of speckles. According to this type, as the diffuse object moves, the individual speckles deform, disappear, and reappear without any appreciable displacement of its position.

In additon, according to the above references, the methods of measuring the velocity of the object based on the statistical characteristics of the dynamic speckles are mainly classified into the correlation method, spatial filtering method, and zero-crossing method. The correlation method includes the autocorrelation method and cross-correlation method. The analyses of those methods are shown in the above references on the premise of the Gaussian beam illumination in which the object is illuminated with the Gaussian beam emitted from the laser. In particular, the arrangements and results of the velocity measurement experiments using the zero-crossing method are given.

According to the zero-crossing method, the number of crossing times when the detection signals which are outputted from the photoelectric detector adapted to receive the speckle pattern (speckle intensity) through a finite-size aperture cross the zero level (or other proper level) is counted, and this count value $N_0$ is multiplied with a coefficient $\beta$, so that the velocity V of the object is obtained. However, the coefficient $\beta$ is expressed by a fairly complicated expression and this expression contains an average grain size $\Delta x$ of speckles in the detecting plane, a parameter $\sigma$ called a speckle translational magnification, and the like. The parameter $\sigma$ is concerned with a distance R between the object and the detecting plane and a wavefront-curvature radius $\rho$ of the laser beam.

The average grain size $\Delta x$ of speckles largely depends on the object to be measured. In the case of changing the object to be measured such that from copper to a paper, from the paper to a cloth, and the like, the value of $\Delta x$ varies for every objects to be measured. Therefore, each time the object to be measured is changed, the average grain size $\Delta x$ of speckles, as one of the parameters which are set to a signal processor, must be corrected. On one hand, since the illuminating light beam is not the perfect spherical wave, it is difficult to select the proper wavefront--curvature radius $\rho$ and a high accurate measurement value is not obtained, causing a problem.

## SUMMARY OF THE INVENTION

It is an object of the present invention to provide a method of and a system for measuring the velocity of the moving object which can obtain relatively high accurate measurement values independently of the average grain size $\Delta x$ of speckles and wavefront-curvature radius $\rho$, which are the indistinct parameters, accordingly, without changing the parameter $\Delta x$ each time the object to be measured is changed.

According to the foregoing references, the normalized time correlation function of the time-varying speckle intensity which is detected at the position at the distance R from the object to be measured is given by the following expression.

$$\Gamma(\tau, V) = \exp\left(-\frac{V^2}{\omega^2}\tau^2\right) \cdot \exp\left(-\frac{\sigma^2 V^2}{\Delta x^2}\tau^2\right) \quad \cdots (1)$$

$$\sigma = 1 + R/\rho \quad \cdots (2)$$

where, $\tau$ is a time and V is a velocity of the object. The other parameters have the following physical meanings.

$\omega$ : Width of the illuminating light beam

$\Delta x$ : Average grain size of speckles

$\sigma$ : Speckle translational magnification which is concerned with the distance R and wavefront-curvature radius $\rho$ as shown in expression (2)

It will be understood from expression (1) that the autocorrelation function decreases with an elapse of the time $\tau$ and with an increase in velocity. Assuming that the time when the correlation function becomes l/e of the value at the origin ($\tau$ = 0) is the time correlation length $\tau_C$,

$$\tau_c = \frac{1}{V}\left(\frac{1}{\omega^2} + \frac{\sigma^2}{\Delta x^2}\right)^{-\frac{1}{2}} \quad \cdots (3).$$

will be obtained from expression (1).

The velocity V of the object can be calculated from expression (3) by measuring the time correlation length $\tau_c$. The above-mentioned method is the autocorrelation method. According to this method, the light beam width $\omega$, average grain size $\Delta x$ of speckles, and speckle translational magnification $\sigma$ (distance R and wavefront-curvature radius $\rho$) are needed as the parameters.

According to the zero-crossing method, the velocity V is derived from the following expression by use of the number $N_0$ of zero-crossings per unit time measured.

$N_0 = \beta V$ ...(4)

The coefficient $\beta$ is given by the following expression.

$$\beta = \frac{\sqrt{2}}{\pi}\left(\frac{1}{\omega^2} + \frac{\sigma^2}{d^2 + \Delta x^2}\right)^{\frac{1}{2}} \quad \cdots (5)$$

where, d is a diameter of finite-size aperture.

Even in this method, the parameters $\omega$, $\Delta x$, and $\sigma$-(R,$\rho$) are needed in addition to the diameter d.

The present invention presents the arrangement conditions of the object to be measured and photo sensing devices (photo sensing surface or detecting plane), in which the second term $\sigma^2/\Delta x^2$ of expression (3) or the second term $\sigma^2/(d^2 + \Delta x^2)$ of expression (5) can be set to zero or can be ignored. By setting those terms to zero or ignoring them,

$$\tau_c = \frac{\omega}{V} \quad \cdots (6)$$

is derived from expression (3) and

$$N_0 = \frac{\sqrt{2}}{\pi}\frac{V}{\omega} \quad \cdots (7)$$

is obtained from expressions (4) and (5).

Therefore, even if the average grain size $\Delta x$ of speckles and parameter $\sigma$ (namely, the distance R and wavefront-curvature radius $\rho$) vary, the measured result is not influenced by these variations.

As well as the above-explained two methods, the invention can be also obviously applied to other methods, for example, time-differentiated speckle intensity variation method and the like.

As is generally employed in the velocity measuring method using the dynamic speckles, even in this invention, the coherent light beam such as a laser beam or the like is used and this light beam is focused by the optical system and converted into the light beam having the waist region, so that the convergent region and divergent region are formed in front of and behind this waist region.

Two kinds of arrangements of the measurement system according to the invention are available to obtain expression (6) or (7) or the like.

The first arrangement is that the object to be measured is arranged in the waist region and the photo sensing surface, namely, the photoelectric converting device is arranged at an enough distant position away from the waist position in the divergent region. The enough distant position in this case denotes the position which satisfies the following expression.

$$\frac{1}{\omega^2} \gg \frac{\sigma^2}{\Delta x^2} \quad \cdots (8)$$

or

$$\frac{1}{\omega^2} \gg \frac{\sigma^2}{d^2 + \Delta x^2} \quad \cdots (9)$$

When the object to be measured is arranged in the waist region, the width $\omega$ of the illuminating light beam becomes minimum (waist width $\omega_0$) and this enables expressions (8) and (9) to be easily satisfied. As the distance R between the object to be measured and the photo sensing surface increases, the average grain size $\Delta x$ of speckles increases ($\Delta x = \lambda R/\pi\omega$: $\lambda$ is a wavelength of the illuminating light), enabling expressions (8) and (9) to be easily satisfied.

In any cases, when expression (8) or (9) is satisfied, the second terms of expressions (3) and (5) can be ignored, so that expressions (6) and (7) are satisfied.

The second optical arrangement is that the object to be measured is arranged in the convergent region and the photo sensing surface is arranged in the waist region, respectively. According to the spherical wave approximation, the relation of $|R| \fallingdotseq |\rho|$ is satisfied and $R \fallingdotseq -\rho$ is satisfied in the convergent region. Thus, $\sigma \fallingdotseq 0$ from expression (2) and the second terms of expressions (3) and (5) become zero and expressions (6) and (7) are satisfied.

In any of the foregoing optical arrangements, mainly the boiling motion of speckles is observed on the photo sensing surface. In other words, the optical measurement arrangements according to the present invention allow the boiling motion of speckles to be detected.

BRIEF DESCRIPTION OF THE DRAWINGS

Fig. 1 shows the first optical arrangement of a velocity measuring system according to the present invention;

Fig. 2 shows the second optical arrangement of the velocity measuring system according to the present invention; and

Fig. 3 is a block diagram showing a signal processor.

DESCRIPTION OF THE PREFERRED EMBODIMENTS

This embodiment intends to measure the velocity of the moving object by applying the zero-crossing method. Therefore, the number $N_0$ of zero-crossings of the speckle detection signals is measured and the velocity V is calculated by substituting the value $N_0$ for expression (7). In addition, the object to be measured is the linear or beltlike transparent object. This object crosses the illuminating beam and moves in the direction perpendicular to the optical axis of the light beam. The speckle pattern based on the scattered light transmitted through the object is detected by a photoelectric detector.

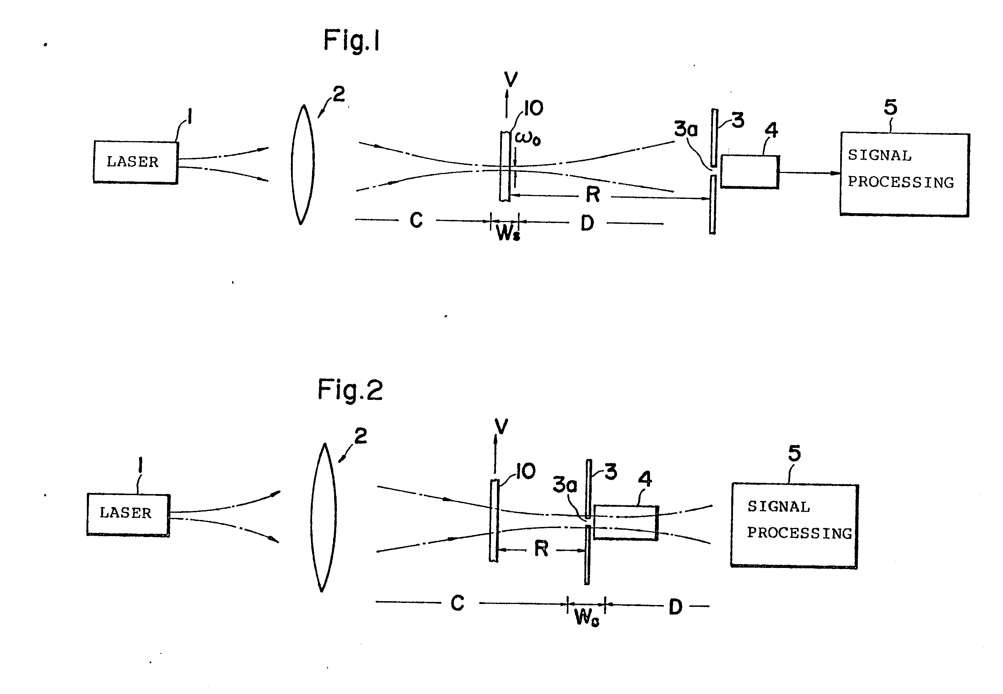

In Fig. 1, a coherent illuminating light beam having the Gaussian distribution is emitted from a laser 1. This laser light beam enters a focusing optical system 2 and is converted into the light beam called a waist beam. The waist beam has a waist region $W_s$ near the focal plane. A convergent region C and a divergent region D are respectively formed in front of and behind the waist region $W_s$. Although a single convex lens is shown as the optical system 2 in the diagram, the optical system 2 is obviously constituted by a combination of several lenses. Assuming that a focal distance of the optical system 2 is f and a beam diameter at the position where the illuminating laser beam is emitted from the optical system 2 is $D_0$, a waist width $\omega_0$ of this laser beam is given by $(f \bullet \lambda)/(\pi \bullet D_0)$.

A linear or beltlike transparent object 10 to be measured passes through the waist position of the illuminating laser beam and moves at the velocity V in the direction perpendicular to the direction of optical axis of the laser beam.

In the divergent region of the illuminating laser beam, a mask plate 3 having a pin-hole aperture 3a is arranged at the position which is apart from the object 10 by the sufficient distance R. A photoelectric detector, for example, a photoelectric converting device 4 is arranged behind the aperture 3a. This detector detects the boiling motion of speckles due to the transmitted scattered light from the object 10 which is observed through the aperture 3a and outputs an electrical signal indicative of the time variation in the boiling motion. This electrical signal is sent to a signal processor 5.

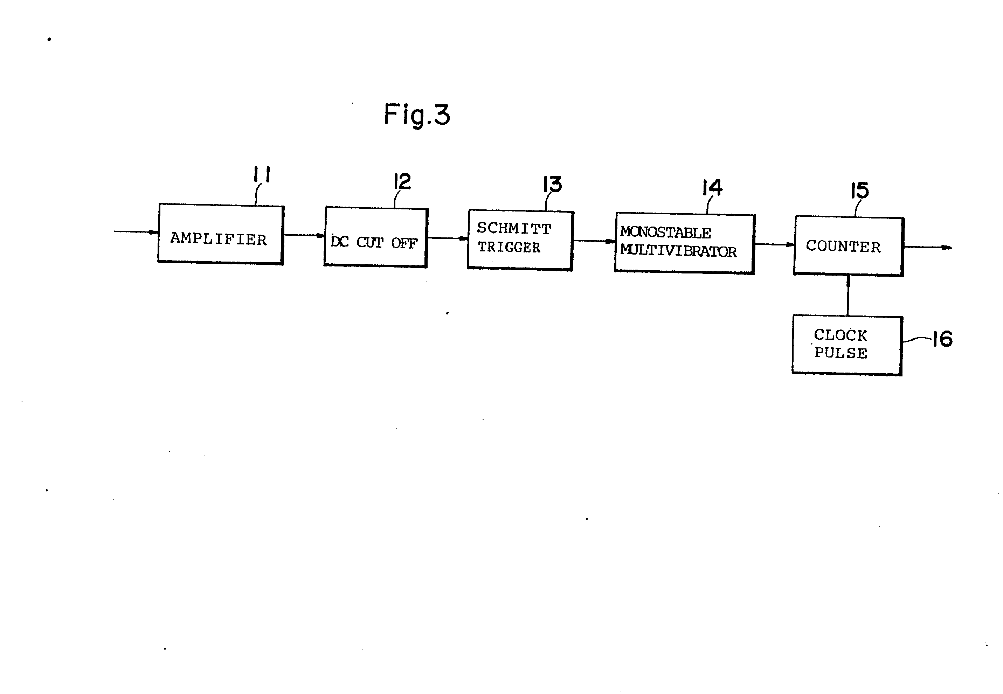

An example of the signal processor 5 is shown in Fig. 3. An output signal (spckle signal or time variation signal of the light intensity based on the boiling motion of speckles) of the photoelectric detector 4 is amplified to a predetermined level by a wide band amplifier 11. The DC component of this signal is then removed by a DC cut-off circuit 12. A Schmitt trigger circuit 13 has substantially zero level as a threshold level. The DC component cut-off input signal is converted by the Schmitt trigger circuit 13 to the pulse train whose high level is inverted to low level or vice versa when this input signal crosses the threshold level of the Schmitt trigger circuit 13. This pulse train is converted to the pulse train of a constant pulse width by a monostable multivibrator 14 and then inputted to a counter 15, by which the number of pulses is counted. An output pulse signal of a clock pulse generator 16 resets the counter 15 at every unit time, so that the number of pulses per unit time is outputted from the counter 15 at very unit time. This number of pulses per unit time is given by $N_0/2$ by use of the number $N_0$ of zero-crossings.

The number of pulses per unit time counted in this manner is given to an operation circuit, for example, a microprocessor (not shown), by which the velocity V of the object 10 is calculated using expression (7). Since the pulse count number is inputted at every unit time, the operation circuit may determine the final velocity V by use of the mean value of those count numbers.

Fig. 2 shows the second arrangement of the optical system according to the present invention. In this arrangement, the object 10 passes through the convergent region C of the illuminating light beam. The photo sensing device 4 and aperture 3a are arranged in the waist region $W_s$. The distance R between the object 10 and the photo sensing device 4 may be set so as to satisfy the relation of $R \geq \pi \omega_0/\lambda$.

In this measuring system as well, the signal processor 5 of the same constitution as above can be obviously used.

Since the invention can be applied to various measuring methods, it is sufficient to use the signal processor which meets the measuring method. For example, in the case of using the autocorrelation method, the circuit which measures the time correlation length $\tau_c$ and calculates expression (6) and obtains the velocity V may be used.

**Claims**

1. A system for measuring a velocity of a moving object comprising:

a light source for generating a coherent illuminating light beam;

an optical system for focusing said illuminating light beam which is emitted from said light source, the illuminating light beam being converted to a waist beam having a waist region due to said focusing, and a convergent region and a divergent region being formed in front of and behind the waist region of said waist beam, respectively; and

photoelectric detecting means for detecting a speckle pattern which is produced due to the moving object which passes through said waist region of said illuminating light beam, said photoelectric detecting means being arranged in said divergent region of the illuminating light beam.

2. A system according to claim 1, further comprising signal processing means for processing an output signal of said photoelectric detecting means by a predetermined method and calculating the velocity of said moving object in accordance with a predetermined operating expression.

3. A system for measuring a velocity of a moving object comprising:

a light source for generating a coherent illuminating light beam;

an optical system for focusing said illuminating light beam which is emitted from said light source, said illuminating light beam being converted to a waist beam having a waist region due to said focusing, and a convergent region and a divergent region being formed in front of and behind the waist region of said waist beam, respectively; and

photoelectric detecting means for detecting a speckle pattern which is produced due to the moving object which passes through said convergent region of said illuminating light beam, said photoelectric detecting means being arranged in said waist region of the illuminating light beam.

4. A system according to claim 3, further comprising signal processing means for processing an output signal of said photoelectric detecting means by a predetermined method and calculating the velocity of said moving object in accordance with a predetermined operating expression.

5. A method of measuring a velocity of a moving object comprising the steps of:

illuminating a moving object by a light beam;

detecting a motion of a speckle patern appearing in the transmitting light of said object or in the reflected light from said object by use of a photoelectric detector; and

processing a detection signal which is outputted from said photoelectric detector to produce a signal representing the velocity of the object,

wherein a passing position of the object in a region of said illuminating light beam and an arrangement position of said photoelectric detector are determined so as to detect a boiling motion of said speckle pattern.

Fig.1
LASER
1
2
10
V
$\omega_0$
$W_s$
C
D
R
3a
3
4
5
SIGNAL PROCESSING

Fig.2
LASER
1
2
10
V
R
C
D
$W_a$
3a
3
4
5
SIGNAL PROCESSING

Fig.3
11
AMPLIFIER
12
DC CUT OFF
13
SCHMITT TRIGGER
14
MONOSTABLE MULTIVIBRATOR
15
COUNTER
16
CLOCK PULSE

European Patent Office

# EUROPEAN SEARCH REPORT

Application number

EP 85 11 6548

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| | | | G 01 P 3/36 |
| D,X | APPLIED PHYSICS, vol. 25, 1981, pages 179-194, Springer-Verlag, Heidelberg, DE; T. ASAKURA et al.: "Dynamic laser speckles and their application to velocity measurements of the diffuse object"<br>* Page 184, left-hand column, line 52 - page 184, right-hand column, line 10; page 185, left-hand column, lines 24-35; page 186, left-hand column, lines 38-44; figures 4(ii),4(iii),16 *<br>--- | 1-5 | |
| X | OPTICAL AND QUANTUM ELECTRONICS, vol. 8, no. 6, November 1976, pages 523-529, Chapman and Hall Ltd., London, GB; J. OHTSUBO et al.: "Velocity measurement of a diffuse object by using time-varying speckles"<br>* Page 526, line 27 - page 527, line 21; figure 1 *<br>--- | 1,2 | **TECHNICAL FIELDS SEARCHED (Int. Cl.4)**<br>G 01 P<br>G 02 B<br>G 01 B |
| A | Idem<br>--- | 3-5 | |
| A | OPTICS COMMUNICATIONS, vol. 16, no. 3, March 1976, pages 334-339, Amsterdam, NL; Y. DZIALOWSKI et al.: "Correlation of speckle patterns generated by laser point source-illuminated diffusers"<br>* Figure 5 *<br>----- | 3 | |

The present search report has been drawn up for all claims

| Place of search | Date of completion of the search | Examiner |
|---|---|---|
| THE HAGUE | 12-03-1986 | PENZKOFER,B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document